# EUROPEAN PATENT SPECIFICATION

(11) **EP 4 394 628 B1**
(45) Date of publication and mention of the grant of the patent: **03.12.2025**
(21) Application number: 23820730.2
(22) Date of filing: 03.03.2023
(51) Int. Cl.: G06F 21/53, G06F 9/455, G06F 12/1009, G06F 21/71, G06F 9/50, G06F 21/62, G06F 21/70

(54) **CODE PROTECTION SYSTEM AND METHOD, VIRTUAL SYSTEM ARCHITECTURE, CHIP AND ELECTRONIC DEVICE**
CODESCHUTZSYSTEM UND -VERFAHREN, VIRTUELLE SYSTEMARCHITEKTUR, CHIP UND ELEKTRONISCHE VORRICHTUNG
SYSTÈME ET PROCÉDÉ DE PROTECTION DE CODE, ARCHITECTURE DE SYSTÈME VIRTUEL, PUCE ET DISPOSITIF ÉLECTRONIQUE

(30) Priority: 07.11.2022 CN 202211385501
(43) Date of publication of application: 03.07.2024
(73) Proprietor: Hygon Information Technology Co., Ltd., Binhai New Area, Tianjin 300392 (CN)
(72) Inventor: YING, Zhiwei, Tianjin 300392 (CN)
(74) Representative: Regimbeau
(86) International application number: PCT/CN2023/079580
(87) International publication number: WO 2024/098594

(56) References cited:
- EP-A1- 3 614 284
- CN-A- 110 348 204
- CN-A- 114 237 817
- CN-A- 114 238 185
- CN-A- 114 238 185
- CN-A- 115 080 183
- CN-A- 115 659 290
- CN-B- 113 434 261
- JP-A- 2022 511 670
- US-A1- 2020 057 664

## Description

### TECHNICAL FIELD

Embodiments of the present disclosure relate to a code protection system, a method, a virtual system architecture, a chip, and an electronic device.

### BACKGROUND

Software code protection refers to providing security protection for code of a piece of software, including providing data confidentiality protection for software code, and providing data integrity protection for software code.

A code protection solution may combine encryption technology and hardware isolation technology, to provide an independent virtual runtime environment for software code, and cause the virtual runtime environment to run in a hardware environment isolated by an Operating System (OS) of a host, so as to implement software code protection.

However, the computing power of the above-mentioned code protection solution is insufficient, and how to improve the computing power of the code protection solution has always been a problem studied by those skilled in the art.

CN 114237817A discloses a virtual machine data read-write method.

CN 114238185A discloses a direct storage access and command data transmission method, a direct storage access and command data transmission device, and related equipment.

CN113434261B discloses a heterogeneous computing device virtualization method and a heterogeneous computing device virtualization system.

### SUMMARY

It is an object of the present invention to provide a code protection system, a method, a virtual system architecture, a chip, and an electronic device. The object is achieved by the features of the respective independent claims. Further embodiments are defined in the respective dependent claims.

### BRIEF DESCRIPTION OF DRAWINGS

In order to more clearly illustrate the embodiments of the present disclosure, the drawings to be used in the embodiments will be briefly described below, and it will be obvious that the drawings in the following description are only embodiments of the present disclosure, and that other drawings may be obtained by those ordinarily skilled in the art according to the drawings provided, without inventive work.
FIG. 1 is a schematic diagram of a system architecture of a virtualization environment based on secure virtualization technology;
FIG. 2 is an optional structure of a code protection system provided by at least one embodiment of the present disclosure;
FIG. 3 is a schematic diagram of a system architecture of a virtualization environment based on secure virtualization technology provided by at least one embodiment of the present disclosure; and
FIG. 4 is a flowchart of a code protection method provided by at least one embodiment of the present disclosure.

### DETAILED DESCRIPTION

Software code protection refers to providing security protection for code of a piece of software, not only providing data confidentiality protection for software code, but also providing data integrity protection for software code; and the software referred to here is not limited to application software, but may also be system software.

A code protection solution may combine encryption technology and hardware isolation technology, to provide an independent virtual runtime environment for software code, and cause the virtual runtime environment to run in a hardware environment isolated by an Operating System (OS) of a host, so as to implement software code protection.

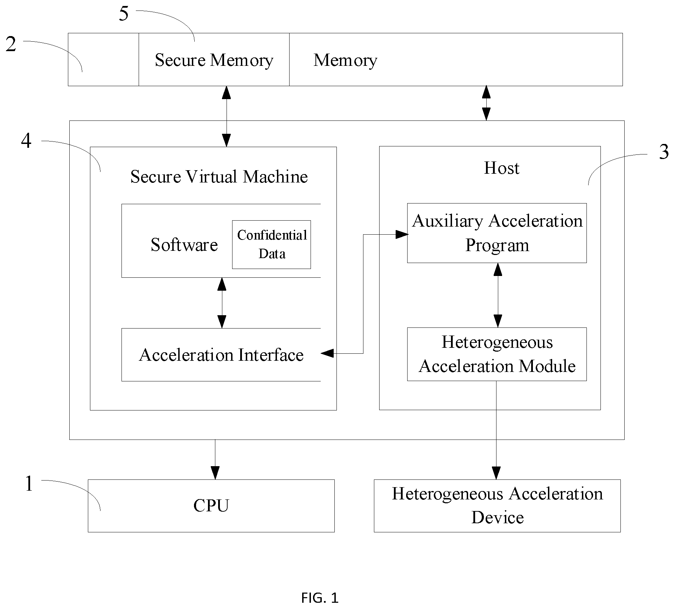

In a specific implementation, the software code protection solution may be implemented based on secure virtualization technology, and the secure virtualization technology is virtualization technology improved on the basis of conventional virtualization technology, that can provide secure protection for a virtual machine memory; referring to FIG. 1, which shows a schematic diagram of a system architecture of a virtualization environment based on secure virtualization technology, the system architecture may include a Central Processing Unit (CPU) 1, a memory 2, a host 3, and a secure virtual machine 4.

For example, the CPU1 is served as a data processing core, and is configured to provide a hardware foundation of data processing for the host 3 and the secure virtual machine 4; the memory 2 is served as a data storage device, and is configured to store data of the host 3 and the secure virtual machine 4; the host 3 may virtualize a plurality of secure virtual machines 4 based on secure virtualization technology; and the secure virtual machine 4 runs independently in a hardware environment isolated by an Operating System (OS) of the host 3.

The secure virtual machine 4 may provide an independent virtual runtime environment for the software code through encryption technology and hardware isolation technology. For example, memory data is encrypted and stored through memory encryption technology, and memories of different secure virtual machines are encrypted with different keys, even the host is incapable of accessing the keys, thereby ensuring security of data of the secure virtual machines. Or, with further reference to FIG. 1, a secure memory 5 is set in the memory 2 by using hardware isolation technology, different secure virtual machines are configured with different regions of the secure memory, and the secure memory only allows access to a correspondingly configured secure virtual machine, thereby ensuring security of data of the secure virtual machine.

The secure virtual machine 4 may be understood as a Trusted Execution Environment (TEE), which may be served as an optional code protection system to protect confidential data (e.g., code) of software. The secure virtual machine 4 may adopt different encryption standards for encryption, and it should be noted that a virtual machine generated by using China's national standard encryption secure virtualization technology may be referred to as a China Secure Virtualization (CSV) virtual machine.

However, the computing power of such a software code protection solution is insufficient. This is because in such a software code protection solution, the secure virtual machine may only utilize a hardware resource of the CPU for data computation, which has limited computation resource, resulting in insufficient computing power.

In an optional implementation, with further reference to FIG. 1, the secure virtual machine may utilize an auxiliary acceleration program and a heterogeneous acceleration module in the host through an acceleration interface, to invocate the heterogeneous acceleration device for data auxiliary computation. The heterogeneous acceleration device may be understood as a computing device with a structure different from the CPU, which has strong computing power for specific types of data processing tasks. However, such a mode requires data interaction with the host, making it difficult to ensure data security.

On this basis, in order to ensure data security, the secure virtual machine, as a code protection system, may only distinguish the code and the data of the software, and isolate the confidential data of the software that needs security protection (the data of the software that needs security protection may be referred to as confidential data, and non-secure data of the software may be referred to as ordinary data) within the secure virtual machine, and after the confidential data related flow is completed, desensitize the data, so that the desensitized data is no longer sensitive; and then the desensitized data and the ordinary data are computed by the heterogeneous acceleration device.

Obviously, the above-mentioned flow is too complex with a high risk of data leakage, so that improvement in computing power of the secure virtual machine is not significant.

Based on this, the embodiments of the present disclosure provide a code protection system. By directly configuring the heterogeneous acceleration resource for the code protection system and setting corresponding modules, the embodiments of the present disclosure enable the code protection system to directly drive the heterogeneous acceleration resource configured thereby to execute the code execution task allocated, so as to invocate a heterogeneous acceleration device without through a host, which enhances the computing power of the system under the premise of safeguarding data security.

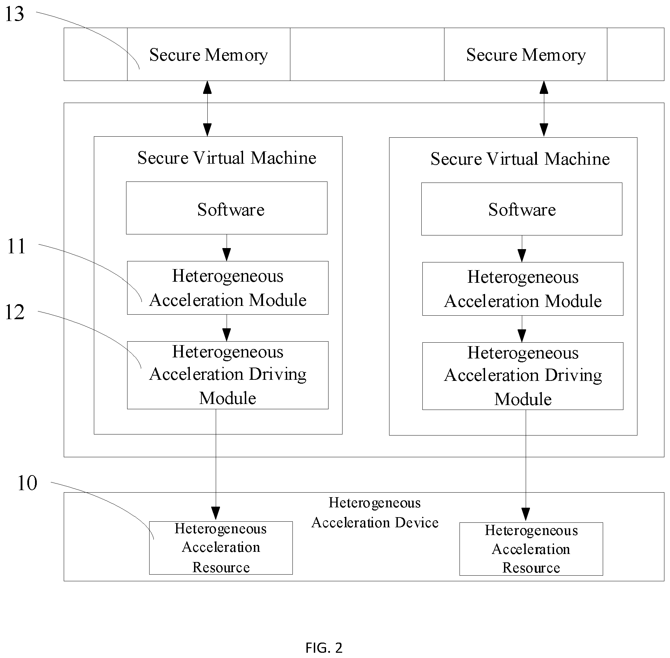

Referring to an optional structure of a code protection system shown in FIG. 2, the code protection system may include a heterogeneous acceleration resource 10, a heterogeneous acceleration module 11, and a heterogeneous acceleration driving module 12.

The heterogeneous acceleration resource 10 may be a heterogeneous acceleration device in a hardware architecture, or may also be a virtual heterogeneous module in a software architecture. The virtual heterogeneous module may be understood as computing power and/or a spatial resource decomposed from the heterogeneous acceleration device, which may be an independent module at a software level, and is capable of performing a corresponding task based on the computing power and/or the spatial resource decomposed thereby. By taking the virtual heterogeneous module as the heterogeneous acceleration resource for configuration, the computing power and/or the spatial resource in the heterogeneous acceleration device may be allocated according to actual needs, thereby maximizing utilization of hardware resources.

For example, the heterogeneous acceleration device may be a peripheral device, and correspondingly, the heterogeneous acceleration resource may be a peripheral device resource. The peripheral device may be, for example, a Graphics Processing Unit (GPU), a General-Purpose Computing On Graphics Processing Unit (GPGPU), a deep computing unit, an Artificial Intelligence (AI) accelerator, a Field-Programmable Gate Array (FPGA), etc., and other devices are configured to provide computing power and/or spatial resource; and accordingly, the heterogeneous acceleration resource may be configured to execute a code execution task of the software, for example, graphics processing, AI acceleration, etc.

It should be noted that the heterogeneous acceleration resource configured for the code protection system is an exclusive resource that only executes the code execution task of the configured code protection system, and does not execute any task of other code protection system or host system, thereby isolating the heterogeneous acceleration resource configured for the code protection system. In an optional example, the heterogeneous acceleration resource configured for the code protection system may be isolated based on hardware isolation technology, thereby implementing data isolation protection.

In a specific example, the heterogeneous acceleration resource may confirm the configured code protection system configured by the heterogeneous acceleration resource based on identity information of the code protection system, and execute a corresponding code execution task when the identity information of the code protection system to which the code execution task belongs matches identity information of the pre-configured code protection system. It should be noted that the identity information of the code protection system may be identity information of the software, or may also be the identity information configured by the system for indicating the identity of the code protection system.

For example, the heterogeneous acceleration resource configured for the code protection system may be one or more, which will not be specifically limited in the present disclosure.

It may be understood that by configuring the heterogeneous acceleration resource for the code protection system, the code protection system can directly drive the heterogeneous acceleration resource configured thereby, so that the heterogeneous acceleration resource can be combined into the trusted execution environment provided by the code protection system, which enhances the computing power of the code protection system under the premise of ensuring data security.

The code execution task may be understood as a task that needs to be executed in a flow running the software, and the software is run through one or more code execution tasks. For example, the code execution task includes running code of the software and/or accessing data of the software.

It should be noted that, according to the embodiments of the present disclosure, the code protection system can directly drive the heterogeneous acceleration resource configured thereby, by directly configuring the heterogeneous acceleration resource for the code protection system and setting a corresponding module, so that all the data in the software may be processed in the trusted execution environment; and accordingly, the code and the data in the software according to the embodiments of the present disclosure do not need to be distinguished between secure code and ordinary code, and between secure data and ordinary data, based on the need for security protection.

The heterogeneous acceleration module 11 is configured to allocate a code execution task to the heterogeneous acceleration resource configured for the code protection system. For example, the heterogeneous acceleration module may determine the code execution task to be executed by the heterogeneous acceleration resource based on type of the code execution task, and task execution efficiency of the code protection system, etc., thereby allocating a corresponding code execution task to the heterogeneous acceleration resource.

The heterogeneous acceleration driving module 12 is configured to drive the configured heterogeneous acceleration resource to execute the code execution task. For example, after determining the code execution task allocated by the heterogeneous acceleration resource configured for the code protection system, the heterogeneous acceleration driving module may send task information of the allocated code execution task to the heterogeneous acceleration resource, thereby driving the heterogeneous acceleration resource to execute the allocated code execution task.

In an optional example, the heterogeneous acceleration module 11 and the heterogeneous acceleration driving module 12 may be configured within a secure virtual machine, and the secure virtual machine is configured to provide an operating system with an isolated environment for the code protection system and provide code protection for software running within the isolated environment.

In a further optional example, the code protection system further includes a secure memory 13 configured for the code protection system, and the secure memory 13 is configured to the code protection system based on encryption technology and/or hardware isolation technology. For example, the secure memory 13 only allows access based on the identity information of the code protection system, to ensure data security of the code protection system.

It may be understood that the heterogeneous acceleration resource may perform identity confirmation of the code protection system allocating the code execution task based on the identity information configured in the code execution task, and may also access task code and/or task data stored in the secure memory for executing the code execution task based on the identity information and the task information of the code execution task, thereby executing the code execution task.

In the code protection system provided by the embodiments of the present disclosure, by configuring the heterogeneous acceleration resource for the code protection system, and by setting the heterogeneous acceleration module and the heterogeneous acceleration driving module, the code protection system can directly allocate the code execution task to the heterogeneous acceleration resource, and drive the heterogeneous acceleration resource to execute the allocated code execution task, so as to invocate the heterogeneous acceleration device without through the host, which enhances the computing power of the system under the premise of safeguarding data security.

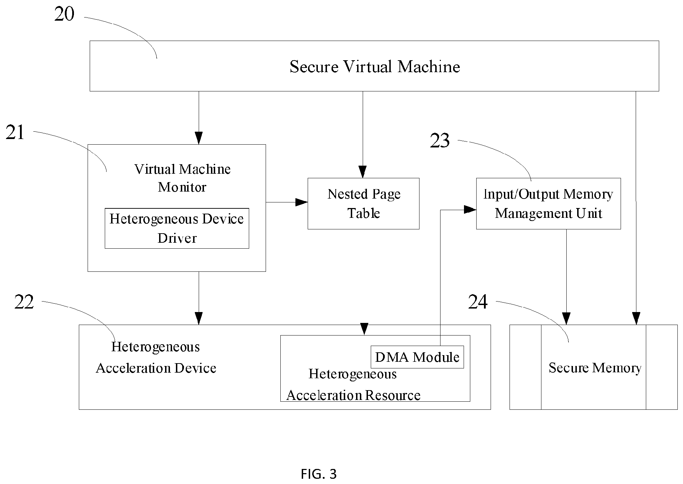

In a further optional example, referring to FIG. 3, the embodiments of the present disclosure further provide a system architecture of a virtualization environment based on secure virtualization technology (which may also be referred to as a virtual system architecture), and the virtual system architecture includes a secure virtual machine 20, a Virtual Machine Monitor (VMM) 21, a heterogeneous acceleration device 22, an Input/Output Memory Management Unit (IOMMU) 23 and a secure memory 24.

The secure virtual machine 20 may be understood as a code protection system, and is configured to provide a trusted execution environment for running software; the virtual machine monitor 21 is a management module configured in the host system, and is configured to maintain/configure a page table, resource allocation, etc. of the secure virtual machine; the heterogeneous acceleration device 22 is configured to provide a heterogeneous acceleration resource for the code protection system; and the input/output memory management unit 23 is configured to collaboratively implement data transmission between the heterogeneous acceleration device and the secure memory 24.

The heterogeneous acceleration device 22 may be configured as one or more heterogeneous acceleration resources to the secure virtual machine. In the case where the heterogeneous acceleration device is configured as a plurality of heterogeneous acceleration resources, the virtual machine monitor may create a plurality of virtual heterogeneous modules for the heterogeneous acceleration device based on a heterogeneous device driver of a corresponding heterogeneous acceleration device; different virtual heterogeneous modules correspond to different hardware resources of the heterogeneous acceleration device; and one virtual heterogeneous module is served as one heterogeneous acceleration resource. For example, different virtual heterogeneous modules correspond to different memory regions within the heterogeneous acceleration device, and thus may be configured as different heterogeneous acceleration resources to different secure virtual machines at a software level.

When the secure virtual machine needs to be configured with the heterogeneous acceleration resource (e.g., when starting the secure virtual machine, or when creating the secure virtual machine), the heterogeneous acceleration resource may be configured by the virtual machine monitor. It should be noted that in other examples, the configuration may also be performed by the OS system of the host or other entity having heterogeneous acceleration resource configuration permission, and the present disclosure will be illustrated by taking the virtual machine monitor as an example.

Specifically, the virtual machine monitor may configure the corresponding heterogeneous acceleration resource (e.g., the virtual heterogeneous module) to the secure virtual machine through the heterogeneous device driver configured thereby, allowing the secure virtual machine to directly access the heterogeneous acceleration resource, so as to implement direct access of the secure virtual machine to the heterogeneous acceleration resource for use. For example, the direct access of the secure virtual machine to the heterogeneous acceleration resource may be implemented based on Memory Mapped I/O (MMIO) interface technology. Specifically, in an optional example, the virtual machine monitor may create and maintain a nested page table corresponding to the heterogeneous acceleration resource for the secure virtual machine, allowing the heterogeneous acceleration driving module of the secure virtual machine to access the heterogeneous acceleration resource by using the MMIO interface based on the nested page table.

It may be understood that the nested page table is configured to indicate a mapping relationship between a user physical address GPA and a host physical address HPA. When creating a nested page table, a corresponding address mapping relationship has not yet been set up. Therefore, when the secure virtual machine accesses the heterogeneous acceleration resource, a missing page exception may occur (i.e., a corresponding HPA cannot be found through the access address GPA given by the secure virtual machine); the virtual machine monitor may capture access of the secure virtual machine to the heterogeneous acceleration resource based on the missing page exception, and then configure an HPA corresponding to the heterogeneous acceleration resource for the GPA of the secure virtual machine, based on the heterogeneous acceleration resource configured for the secure virtual machine. After setting up the address mapping relationship corresponding to the nested page table, the secure virtual machine may directly access the heterogeneous acceleration resource based on the nested page table in a subsequent access process.

Based on the above description, the heterogeneous acceleration resource may be configured for the secure virtual machine so that the secure virtual machine may directly access the heterogeneous acceleration resource. However, in some optional examples, the heterogeneous acceleration resource configured for the secure virtual machine further accesses data in the secure memory. Hereinafter, the process that the heterogeneous acceleration resource accesses the secure memory will be introduced.

It may be understood that during task processing of the software, the corresponding code execution task may need to read other task code in the secure memory or read task data of the software stored in the secure memory; if it is read by the secure virtual machine and then transmitted to the heterogeneous acceleration resource, it will consume corresponding CPU resources and consume a corresponding processing duration.

In some optional examples, in order to improve data transmission efficiency while reducing CPU resource consumption, the heterogeneous acceleration resource may direct access to the data in the secure memory based on Direct Memory Access (DMA) technology, by utilizing the Input/Output Memory Management Unit (IOMMU).

Specifically, the heterogeneous acceleration resource may further include a command processor (not shown) and a DMA module, the command processor may determine an address of the task code and/or the task data to be accessed based on the task information of the code execution task allocated by the heterogeneous acceleration resource; the DMA module may send a memory data access request to the input/output memory management unit, according to the address of the task code and/or the task data to be accessed; and the corresponding task code and/or task data are read by the input/output memory management unit, and then transmitted to the heterogeneous acceleration resource.

In an optional example, in order to ensure data security of the secure virtual machine, the command processor may determine the identity information of the secure virtual machine corresponding to the code execution task, based on the code execution task executed by the heterogeneous acceleration resource, and simultaneously configure the identity information to the memory data access request, which is sent by the DMA module to the input/output memory management unit; and the input/output memory management unit confirms whether the address of the code or the data accessed thereby matches the identity information, and then transmits data between the secure memory and the heterogeneous acceleration resource after confirming the identity information.

In a further optional example, the data stored in the secure memory (including the task code and/or the task data) is encrypted data. Accordingly, the input/output memory management unit may determine a key for the secure virtual machine to store data in the secure memory based on the identity information, and then decrypt the encrypted data in the secure memory based on the key, thereby transmitting the corresponding data (including the task code and/or the task data) to the heterogeneous acceleration resource.

Based on the code protection system provided by the embodiments of the present disclosure, security is guaranteed and computing performance is improved, so that the code protection system may be configured to provide a trusted execution environment based on the software, and/or, the code protection system is configured to provide a runtime environment for secure multi-party computation and/or federal learning.

Secure Multi-Party Computation (MPC) is an important tool in modern cryptography, and huge demand for private data sharing has made MPC highly valued by the cryptography community and developed into a key technology to solve various privacy protection problems. MPC is based on cryptographic algorithm protocols to achieve the purpose of privacy computation, and may be viewed as a comprehensive application of various cryptographic basic tools.

Federal learning (FL) is an emerging artificial intelligence foundational technology, which involves training a model by each institution having a data source, performing iterative interaction optimization on relevant information of the respective models (weight updates and gradient information of the models) in an encrypting manner, and then aggregating the models to obtain a global model. The trained federal learning models are not shared but separately placed among the respective participating parties, and during actual use, cooperate to form predictions.

In a specific example, the code protection system provided by the embodiments of the present disclosure allows MPC software to be executed by directly utilizing computing power of the CPU, or to be executed by utilizing the heterogeneous acceleration resource; and in the case where AI or other heterogeneous acceleration is required in FL, the heterogeneous acceleration resource therein may be used, for example, GPGPU or other acceleration cards may be used.

The system architecture provided by the embodiments of the present disclosure improves data computing performance while ensuring data security, and improves data transmission efficiency.

Based on the code protection system provided by the embodiments of the present disclosure, the embodiments of the present disclosure may further provide a code protection method, so that software may run in a trusted execution environment based on the method.

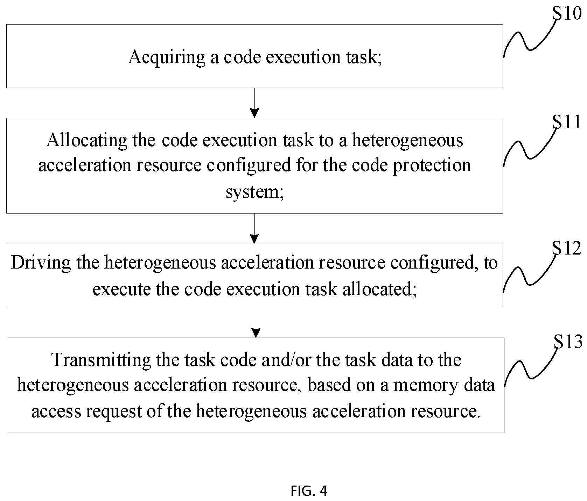

Optionally, FIG. 4 shows a flowchart of a code protection method provided by at least one embodiment of the present disclosure; referring to FIG. 4, the flowchart may be used to describe a flow of code of a piece of software in a code protection system when heterogeneous acceleration is required, and the software in the flow may run in the code protection system provided by the foregoing embodiments; and the content of the code protection method as described below and the content of the code protection system as described above may be mutually referred to.

Referring to FIG. 4, the code protection method may include the following steps.

Step S10: acquiring a code execution task, in which the code execution task includes running code of a piece of software and/or accessing data of the software.

Step S11: allocating the code execution task to a heterogeneous acceleration resource configured for the code protection system.

Step S12: driving the heterogeneous acceleration resource configured, to execute the code execution task allocated.

Optionally, the code execution task is configured with identity information of the code protection system, so that the heterogeneous acceleration resource executes the code execution task when the identity information of the code protection system to which the code execution task allocated for execution belongs matches identity information pre-configured of the code protection system.

Optionally, step S12, driving the heterogeneous acceleration resource configured, to execute the code execution task allocated, may include accessing the heterogeneous acceleration resource based on a memory-mapped I/O interface.

Optionally, the task code and/or the task data configured to execute the code execution task are stored in the memory, and the method further includes the following step.

Step S13: transmitting the task code and/or the task data to the heterogeneous acceleration resource, based on a memory data access request of the heterogeneous acceleration resource.

For example, the memory data access request is sent based on the address of the task code and/or the task data to be accessed by the heterogeneous acceleration resource as determined by task information of the code execution task.

Optionally, the memory data access request is configured with identity information of the code protection system; the identity information is determined based on the code execution task executed by the heterogeneous acceleration resource; and the step S13, transmitting the task code and/or the task data to the heterogeneous acceleration resource, based on the memory data access request of the heterogeneous acceleration resource, includes the following steps.

Determining whether the identity information matches the address accessed by the memory data access request;
and if matches, transmitting the task code and/or the task data to the heterogeneous acceleration resource.

The code protection method provided by the embodiments of the present disclosure can improve data computing performance while ensuring data security, and improve data transmission efficiency.

As an optional implementation, the embodiments of the present disclosure further provide a chip, and the chip includes the code protection system provided by the embodiments of the present disclosure.

As an optional implementation, the embodiments of the present disclosure further provide an electronic device, and the electronic device includes the above-described chip.

## Claims

1. A code protection system, comprising:
a heterogeneous acceleration resource (10) configured for the code protection system, wherein the heterogeneous acceleration resource (10) is configured to execute a code execution task of a piece of software, and the code execution task comprises running code of the software and/or accessing data of the software;
a heterogeneous acceleration module (11), configured to allocate the code execution task to the heterogeneous acceleration resource (10) configured for the code protection system; and
a heterogeneous acceleration driving module (12), configured to drive the heterogeneous acceleration resource (10) to execute the code execution task allocated,
wherein the heterogeneous acceleration module (11) is configured to perform following operations to allocate the code execution task to the heterogeneous acceleration resource (10) configured for the code protection system:
determining the code execution task to be executed by the heterogeneous acceleration resource (10) based on a type of the code execution task and task execution efficiency of the code protection system to allocate the code execution task to the heterogeneous acceleration resource (10);
wherein after determining the code execution task to be executed by the heterogeneous acceleration resource (10), the heterogeneous acceleration driving module (12) is configured to send task information of the code execution task to the heterogeneous acceleration resource (10) to drive the heterogeneous acceleration resource (10) to execute the code execution task, wherein the task information is used to determine an address of task code and/or task data to be accessed;
wherein the code protection system further comprises a secure memory (13), wherein the task code and/or the task data configured to execute the code execution task are stored in the secure memory (13);
the heterogeneous acceleration resource (10) comprises a command processor and a direct memory access DMA module;
the command processor is configured to determine the address of the task code and/or the task data to be accessed, based on the task information of the code execution task allocated by the heterogeneous acceleration resource (10);
the DMA module is configured to send a memory data access request to an input/output memory management unit (23), according to the address of the task code and/or the task data to be accessed, and receive the task code and/or the task data transmitted by the input/output memory management unit (23).

2. The code protection system according to claim 1, wherein the heterogeneous acceleration resource (10) is a heterogeneous acceleration device (22) or a virtual heterogeneous module, and the heterogeneous acceleration resource (10) is configured by a virtual machine monitor (21) to the code protection system; and
the virtual heterogeneous module is created by the virtual machine monitor (21) based on a heterogeneous device driver corresponding to the heterogeneous acceleration device (22), and different virtual heterogeneous modules correspond to different memory regions within the heterogeneous acceleration device (22).

3. The code protection system according to claim 1 or 2, wherein the heterogeneous acceleration resource (10) only executes the code execution task of the code protection system configured; and
the code execution task is configured with identity information of the code protection system, and the heterogeneous acceleration resource (10) is configured to execute the code execution task when the identity information of the code protection system to which the code execution task allocated for execution belongs matches identity information pre-configured of the code protection system.

4. The code protection system according to any one of claims 1 to 3, wherein the heterogeneous acceleration driving module (12) being configured to drive the heterogeneous acceleration resource (10) configured, to execute the code execution task allocated, comprises:
accessing the heterogeneous acceleration resource (10) based on a memory-mapped I/O interface.

5. The code protection system according to any one of claims 1 to 4, wherein the command processor is further configured to determine identity information of the code protection system corresponding to the code execution task, based on the code execution task executed by the heterogeneous acceleration resource (10), and configure the identity information to the memory data access request; and
the code protection system is configured to provide a software-based trusted execution environment, and/or the code protection system is configured to provide a runtime environment for secure multi-party computation and/or federal learning.

6. A code protection method, applied to a code protection system, wherein the code protection system is configured with a heterogeneous acceleration resource, and the code protection method comprises:
acquiring a code execution task (S10), wherein the code execution task comprises running code of a piece of software and/or accessing data of the software;
allocating, by a heterogeneous acceleration module, the code execution task to the heterogeneous acceleration resource configured for the code protection system (S11); and
driving, by a heterogeneous acceleration driving module, the heterogeneous acceleration resource to execute the code execution task allocated (S12),
wherein the allocating, by a heterogeneous acceleration module, the code execution task to the heterogeneous acceleration resource configured for the code protection system, comprises:
determining the code execution task to be executed by the heterogeneous acceleration resource based on a type of the code execution task and task execution efficiency of the code protection system to allocate the code execution task to the heterogeneous acceleration resource;
wherein after the determining the code execution task to be executed by the heterogeneous acceleration resource, the code protection method further comprises:
sending, by the heterogeneous acceleration driving module, task information of the code execution task to the heterogeneous acceleration resource to drive the heterogeneous acceleration resource to execute the code execution task, wherein the task information is used to determine an address of task code and/or task data to be accessed;
wherein the heterogeneous acceleration resource (10) comprises a command processor and a direct memory access DMA module, the task code and/or the task data configured to execute the code execution task are stored in a secure memory, and the code protection method further comprises:
transmitting the task code and/or the task data to the heterogeneous acceleration resource, based on a memory data access request of the heterogeneous acceleration resource (S13), wherein the memory data access request is sent based on an address of the task code and/or the task data to be accessed by the heterogeneous acceleration resource as determined by the task information of the code execution task, the address of the task code and/or the task data to be accessed is determined by the command processor, the memory data access request is sent by the DMA module to an input/output memory management unit (23), according to the address of the task code and/or the task data to be accessed, to transmit the task code and/or the task data transmitted by the input/output memory management unit (23) to the heterogeneous acceleration resource.

7. The code protection method according to claim 6, wherein the code execution task is configured with identity information of the code protection system, so that the heterogeneous acceleration resource executes the code execution task when the identity information of the code protection system to which the code execution task allocated for execution belongs matches identity information pre-configured of the code protection system.

8. The code protection method according to claim 6 or 7, wherein driving the heterogeneous acceleration resource configured, to execute the code execution task allocated, comprises:
accessing the heterogeneous acceleration resource based on a memory-mapped I/O interface.

9. The code protection method according to any one of claims 6 to 8, wherein the code protection method further comprises:
the memory data access request is configured with identity information of the code protection system, and the identity information is determined based on the code execution task executed by the heterogeneous acceleration resource;
transmitting the task code and/or the task data to the heterogeneous acceleration resource, based on the memory data access request of the heterogeneous acceleration resource, comprises:
determining whether the identity information matches an address accessed by the memory data access request; and
if matches, transmitting the task code and/or the task data to the heterogeneous acceleration resource.

10. A virtual system architecture, comprising a secure virtual machine, a virtual machine monitor (21), and a heterogeneous acceleration device (22), wherein the secure virtual machine is the code protection system according to any one of claims 1 to 5.

11. The virtual system architecture according to claim 10, wherein the virtual machine monitor (21) is configured to configure a heterogeneous acceleration resource (10) for the secure virtual machine;
the heterogeneous acceleration resource (10) is the heterogeneous acceleration device (22) or a virtual heterogeneous module; and
the virtual heterogeneous module is created by the virtual machine monitor (21) based on a heterogeneous device driver corresponding to the heterogeneous acceleration device (22), and different virtual heterogeneous modules correspond to different memory regions within the heterogeneous acceleration device (22).

12. The virtual system architecture according to claim 10, wherein the virtual machine monitor (21) is configured to configure a nested page table for the secure virtual machine; and
the nested page table is configured to indicate a mapping relationship between a user physical address of the secure virtual machine to a host physical address of the heterogeneous acceleration resource (10).

13. The virtual system architecture according to any one of claims 10 to 12, further comprising a secure memory (13) and an input/output memory management unit (23),
wherein the secure memory (13) is configured to the secure virtual machine, and task code and/or task data configured to execute the code execution task are stored in the secure memory (13);
the input/output memory management unit (23) is configured to receive a memory data access request sent by the heterogeneous acceleration resource (10), and transmit the task code and/or the task data to the heterogeneous acceleration resource (10) based on the memory data access request;
the memory data access request is configured with identity information corresponding to the secure virtual machine, and the input/output memory management unit (23) being configured to transmit the task code and/or the task data to the heterogeneous acceleration resource (10) based on the memory data access request, comprises:
determining whether the identity information matches an address accessed by the memory data access request; and
if matches, transmitting the task code and/or the task data to the heterogeneous acceleration resource (10).

14. A chip, comprising the code protection system according to any one of claims 1 to 5.

15. An electronic device, comprising the chip according to claim 14.

## Patentansprüche

1. Codeschutzsystem, umfassend:
eine heterogene Beschleunigungsressource (10), die für das Codeschutzsystem konfiguriert ist, wobei die heterogene Beschleunigungsressource (10) so konfiguriert ist, dass sie eine Codeausführungsaufgabe einer Software ausführt, und die Codeausführungsaufgabe das Ausführen von Code der Software und/oder den Zugriff auf Daten der Software umfasst;
ein heterogenes Beschleunigungsmodul (11), das so konfiguriert ist, dass es die Codeausführungsaufgabe der heterogenen Beschleunigungsressource (10) zuweist, die für das Codeschutzsystem konfiguriert ist; und
ein heterogenes Beschleunigungsansteuerungsmodul (12), das so konfiguriert ist, dass es die heterogene Beschleunigungsressource (10) ansteuert, um die zugewiesene Codeausführungsaufgabe auszuführen,
wobei das heterogene Beschleunigungsmodul (11) so konfiguriert ist, dass es folgende Vorgänge durchführt, um die Codeausführungsaufgabe der heterogenen Beschleunigungsressource (10) zuzuweisen, die für das Codeschutzsystem konfiguriert ist:
Bestimmen der durch die heterogene Beschleunigungsressource (10) auszuführenden Codeausführungsaufgabe basierend auf der Art der Codeausführungsaufgabe und der Aufgabenausführungseffizienz des Codeschutzsystems, um die Codeausführungsaufgabe der heterogenen Beschleunigungsressource (10) zuzuweisen;
wobei nach dem Bestimmen der durch die heterogene Beschleunigungsressource (10) auszuführenden Codeausführungsaufgabe das heterogene Beschleunigungsansteuerungsmodul (12) so konfiguriert ist, dass es Aufgabeninformationen der Codeausführungsaufgabe an die heterogene Beschleunigungsressource (10) sendet, um die heterogene Beschleunigungsressource (10) anzusteuern, um die Codeausführungsaufgabe auszuführen, wobei die Aufgabeninformationen verwendet werden, um eine Adresse des Aufgabencodes und/oder der Aufgabendaten, auf die zugegriffen werden soll, zu bestimmen;
wobei das Codeschutzsystem ferner einen sicheren Speicher (13) umfasst, wobei der Aufgabencode und/oder die Aufgabendaten, die zum Ausführen der Codeausführungsaufgabe konfiguriert sind, in dem sicheren Speicher (13) gespeichert sind;
die heterogene Beschleunigungsressource (10) einen Befehlsprozessor und ein Direktspeicherzugriffsmodul, DMA-Modul, umfasst;
der Befehlsprozessor so konfiguriert ist, dass er die Adresse des Aufgabencodes und/oder der Aufgabendaten, auf die zugegriffen werden soll, basierend auf den Aufgabeninformationen der von der heterogenen Beschleunigungsressource (10) zugewiesenen Codeausführungsaufgabe bestimmt;
das DMA-Modul so konfiguriert ist, dass es eine Speicherdatenzugriffsanfrage an eine Eingangs-/Ausgangsspeicherverwaltungseinheit (23) entsprechend der Adresse des Aufgabencodes und/oder der Aufgabendaten, auf die zugegriffen werden soll, sendet und den Aufgabencode und/oder die von der Eingangs-/Ausgangsspeicherverwaltungseinheit (23) übertragenen Aufgabendaten empfängt

2. Codeschutzsystem nach Anspruch 1, wobei die heterogene Beschleunigungsressource (10) eine heterogene Beschleunigungsvorrichtung (22) oder ein virtuelles heterogenes Modul ist und die heterogene Beschleunigungsressource (10) durch einen virtuellen Maschinenmonitor (21) für das Codeschutzsystem konfiguriert ist; und
das virtuelle heterogene Modul vom virtuellen Maschinenmonitor (21) basierend auf einem heterogenen Gerätetreiber erstellt wird, der der heterogenen Beschleunigungsvorrichtung (22) entspricht, und verschiedene virtuelle heterogene Module verschiedenen Speicherbereichen innerhalb der heterogenen Beschleunigungsvorrichtung (22) entsprechen.

3. Codeschutzsystem nach Anspruch 1 oder 2, wobei die heterogene Beschleunigungsressource (10) nur die Codeausführungsaufgabe des konfigurierten Codeschutzsystems ausführt; und
die Codeausführungsaufgabe mit Identitätsinformationen des Codeschutzsystems konfiguriert ist, und die heterogene Beschleunigungsressource (10) so konfiguriert ist, dass sie die Codeausführungsaufgabe ausführt, wenn die Identitätsinformationen des Codeschutzsystems, zu dem die zur Ausführung zugewiesene Codeausführungsaufgabe gehört, mit den vorkonfigurierten Identitätsinformationen des Codeschutzsystems übereinstimmen.

4. Codeschutzsystem nach einem der Ansprüche 1 bis 3, wobei das heterogene Beschleunigungsansteuerungsmodul (12) so konfiguriert ist, dass es die heterogene Beschleunigungsressource (10) ansteuert, die konfiguriert ist, um die zugewiesene Codeausführungsaufgabe auszuführen, umfasst:
Zugreifen auf die heterogene Beschleunigungsressource (10) basierend auf einer speicherabgebildeten E/A-Schnittstelle.

5. Codeschutzsystem nach einem der Ansprüche 1 bis 4, wobei der Befehlsprozessor ferner so konfiguriert ist, dass er Identitätsinformationen des Codeschutzsystems, die der Codeausführungsaufgabe entsprechen, basierend auf der von der heterogenen Beschleunigungsressource (10) ausgeführten Codeausführungsaufgabe bestimmt und die Identitätsinformationen für die Speicherdatenzugriffsanfrage konfiguriert; und
das Codeschutzsystem so konfiguriert ist, dass es eine softwarebasierte vertrauenswürdige Ausführungsumgebung bereitstellt, und/oder das Codeschutzsystem so konfiguriert ist, dass es eine Laufzeitumgebung für sichere Mehrparteienberechnungen und/oder föderiertes Lernen bereitstellt.

6. Codeschutzverfahren, das auf ein Codeschutzsystem angewendet wird, wobei das Codeschutzsystem mit einer heterogenen Beschleunigungsressource konfiguriert ist und das Codeschutzverfahren Folgendes umfasst:
Erwerben einer Codeausführungsaufgabe (S10), wobei die Codeausführungsaufgabe das Ausführen von Code einer Software und/oder das Zugreifen auf Daten der Software umfasst;
Zuweisen der Codeausführungsaufgabe durch ein heterogenes Beschleunigungsmodul an die für das Codeschutzsystem konfigurierte heterogene Beschleunigungsressource (S11); und Ansteuern der heterogenen Beschleunigungsressource durch ein heterogenes Beschleunigungsansteuerungsmodul, um die zugewiesene Codeausführungsaufgabe auszuführen (S12),
wobei das Zuweisen der Codeausführungsaufgabe durch ein heterogenes Beschleunigungsmodul an die heterogene Beschleunigungsressource, die für das Codeschutzsystem konfiguriert ist, umfasst: Bestimmen der durch die heterogene Beschleunigungsressource auszuführenden Codeausführungsaufgabe basierend auf der Art der Codeausführungsaufgabe und der Aufgabenausführungseffizienz des Codeschutzsystems, um die Codeausführungsaufgabe der heterogenen Beschleunigungsressource zuzuweisen;
wobei das Codeschutzverfahren nach dem Bestimmen der durch die heterogene Beschleunigungsressource auszuführenden Codeausführungsaufgabe ferner Folgendes umfasst:
Senden von Aufgabeninformationen der Codeausführungsaufgabe an die heterogene Beschleunigungsressource durch das heterogene Beschleunigungsansteuerungsmodul, um die heterogene Beschleunigungsressrouce anzusteuern, um die Codeausführungsaufgabe auszuführen, wobei die Aufgabeninformationen verwendet werden, um eine Adresse des Aufgabencodes und/oder der Aufgabendaten, auf die zugegriffen werden soll, zu bestimmen;
wobei die heterogene Beschleunigungsressource (10) einen Befehlsprozessor und ein Direktspeicherzugriffsmodul, DMA-Modul, umfasst, der Aufgabencode und/oder die Aufgabendaten, die zum Ausführen der Codeausführungsaufgabe konfiguriert sind, in einem sicheren Speicher gespeichert sind, und das Codeschutzverfahren ferner Folgendes umfasst:
Übertragen des Aufgabencodes und/oder der Aufgabendaten an die heterogene Beschleunigungsressource basierend auf einer Speicherdatenzugriffsanfrage der heterogenen Beschleunigungsressource (S13), wobei die Speicherdatenzugriffsanfrage basierend auf einer Adresse des Aufgabencodes und/oder der Aufgabendaten gesendet wird, auf die die heterogene Beschleunigungsressource gemäß den Aufgabeninformationen der Codeausführungsaufgabe zugreifen soll; die Adresse des Aufgabencodes und/oder der Aufgabendaten, auf die zugegriffen werden soll, vom Befehlsprozessor bestimmt wird, die Speicherdatenzugriffsanfrage vom DMA-Modul an eine Eingangs-/Ausgangsspeicherverwaltungseinheit (23) entsprechend der Adresse des Aufgabencodes und/oder der Aufgabendaten, auf die zugegriffen werden soll, gesendet wird, um den Aufgabencode und/oder die Aufgabendaten, die von der Eingangs-/Ausgangsspeicherverwaltungseinheit (23) übertragen werden, an die heterogene Beschleunigungsressource zu übertragen.

7. Codeschutzverfahren nach Anspruch 6, wobei die Codeausführungsaufgabe mit Identitätsinformationen des Codeschutzsystems konfiguriert ist, sodass die heterogene Beschleunigungsressource die Codeausführungsaufgabe ausführt, wenn die Identitätsinformationen des Codeschutzsystems, zu dem die zur Ausführung zugewiesene Codeausführungsaufgabe gehört, mit den vorkonfigurierten Identitätsinformationen des Codeschutzsystems übereinstimmen.

8. Codeschutzverfahren nach Anspruch 6 oder 7, wobei das Ansteuern der heterogenen Beschleunigungsressource, die zum Ausführen der zugewiesenen Codeausführungsaufgabe konfiguriert ist, Folgendes umfasst:
Zugreifen auf die heterogene Beschleunigungsressource basierend auf einer speicherabgebildeten E/A-Schnittstelle.

9. Codeschutzverfahren nach einem der Ansprüche 6 bis 8, wobei das Codeschutzverfahren ferner Folgendes umfasst:
die Speicherdatenzugriffsanfrage ist mit Identitätsinformationen des Codeschutzsystems konfiguriert, und die Identitätsinformationen werden basierend auf der von der heterogenen Beschleunigungsressource ausgeführten Codeausführungsaufgabe bestimmt;
das Übertragen des Aufgabencodes und/oder der Aufgabendaten an die heterogene Beschleunigungsressource basierend auf der Speicherdatenzugriffsanfrage der heterogenen Beschleunigungsressource, umfasst:
Bestimmen, ob die Identitätsinformationen mit einer Adresse übereinstimmen, auf die durch die Speicherdatenzugriffsanfrage zugegriffen wird; und
wenn sie übereinstimmen, Übertragen des Aufgabencodes und/oder der Aufgabendaten an die heterogene Beschleunigungsressource.

10. Virtuelle Systemarchitektur, umfassend eine sichere virtuelle Maschine, einen virtuellen Maschinenmonitor (21) und eine heterogene Beschleunigungsvorrichtung (22), wobei die sichere virtuelle Maschine das Codeschutzsystem nach einem der Ansprüche 1 bis 5 ist.

11. Virtuelle Systemarchitektur nach Anspruch 10, wobei der virtuelle Maschinenmonitor (21) so konfiguriert ist, dass er eine heterogene Beschleunigungsressource (10) für die sichere virtuelle Maschine konfiguriert;
die heterogene Beschleunigungsressource (10) die heterogene Beschleunigungsvorrichtung (22) oder ein virtuelles heterogenes Modul ist; und
das virtuelle heterogene Modul vom virtuellen Maschinenmonitor (21) basierend auf einem heterogenen Gerätetreiber erstellt wird, der der heterogenen Beschleunigungsvorrichtung (22) entspricht, und verschiedene virtuelle heterogene Module verschiedenen Speicherbereichen innerhalb der heterogenen Beschleunigungsvorrichtung (22) entsprechen.

12. Virtuelle Systemarchitektur nach Anspruch 10, wobei der virtuelle Maschinenmonitor (21) so konfiguriert ist, dass er eine verschachtelte Seitentabelle für die sichere virtuelle Maschine konfiguriert; und
die verschachtelte Seitentabelle so konfiguriert ist, dass sie eine Zuordnungsbeziehung zwischen einer physischen Benutzeradresse der sicheren virtuellen Maschine und einer physischen Hostadresse der heterogenen Beschleunigungsressource (10) angibt.

13. Virtuelle Systemarchitektur nach einem der Ansprüche 10 bis 12, ferner umfassend einen sicheren Speicher (13) und eine Eingangs-/Ausgangsspeicherverwaltungseinheit (23), wobei der sichere Speicher (13) für die sichere virtuelle Maschine konfiguriert ist und der Aufgabencode und/oder die Aufgabendaten, die zum Ausführen der Codeausführungsaufgabe bestimmt sind, im sicheren Speicher (13) gespeichert werden;
die Eingangs-/Ausgangsspeicherverwaltungseinheit (23) so konfiguriert ist, dass sie eine von der heterogenen Beschleunigungsressource (10) gesendete Speicherdatenzugriffsanfrage empfängt und den Aufgabencode und/oder die Aufgabendaten basierend auf der Speicherdatenzugriffsanfrage an die heterogene Beschleunigungsressource (10) überträgt;
die Speicherdatenzugriffsanfrage mit Identitätsinformationen konfiguriert ist, die der sicheren virtuellen Maschine entsprechen, und die Eingangs-/Ausgangsspeicherverwaltungseinheit (23) so konfiguriert ist, dass sie den Aufgabencode und/oder die Aufgabendaten basierend auf der Speicherdatenzugriffsanfrage an die heterogene Beschleunigungsressource (10) überträgt, umfasst:
Bestimmen, ob die Identitätsinformationen mit einer Adresse übereinstimmen, auf die durch die Speicherdatenzugriffsanfrage zugegriffen wird; und
wenn sie übereinstimmen, Übertragen des Aufgabencodes und/oder der Aufgabendaten an die heterogene Beschleunigungsressource (10).

14. Chip, umfassend das Codeschutzsystem nach einem der Ansprüche 1 bis 5.

15. Elektronische Vorrichtung, die den Chip nach Anspruch 14 umfasst.

## Revendications

1. Système de protection de code, comprenant :
une ressource d'accélération hétérogène (10) configurée pour le système de protection de code, dans lequel la ressource d'accélération hétérogène (10) est configurée pour exécuter une tâche d'exécution de code d'un logiciel, et la tâche d'exécution de code comprend l'exécution du code du logiciel et/ou l'accès aux données du logiciel ;
un module d'accélération hétérogène (11), configuré pour allouer la tâche d'exécution de code à la ressource d'accélération hétérogène (10) configurée pour le système de protection de code ; et
un module de pilotage d'accélération hétérogène (12), configuré pour piloter la ressource d'accélération hétérogène (10) afin d'exécuter la tâche d'exécution de code allouée,
dans lequel le module d'accélération hétérogène (11) est configuré pour effectuer les opérations suivantes afin d'allouer la tâche d'exécution de code à la ressource d'accélération hétérogène (10) configurée pour le système de protection de code :
déterminer la tâche d'exécution de code à exécuter par la ressource d'accélération hétérogène (10) sur la base d'un type de tâche d'exécution de code et d'une efficacité d'exécution de tâche du système de protection de code afin d'allouer la tâche d'exécution de code à la ressource d'accélération hétérogène (10) ;
dans lequel, après avoir déterminé la tâche d'exécution de code à exécuter par la ressource d'accélération hétérogène (10), le module de commande d'accélération hétérogène (12) est configuré pour envoyer des informations de tâche de la tâche d'exécution de code à la ressource d'accélération hétérogène (10) afin de commander à la ressource d'accélération hétérogène (10) d'exécuter la tâche d'exécution de code, dans lequel les informations de tâche sont utilisées pour déterminer une adresse de code de tâche et/ou de données de tâche à laquelle accéder ;
dans lequel le système de protection de code comprend en outre une mémoire sécurisée (13), dans laquelle le code de tâche et/ou les données de tâche configurés pour exécuter la tâche d'exécution de code sont stockés dans la mémoire sécurisée (13) ;
la ressource d'accélération hétérogène (10) comprend un processeur de commande et un module DMA d'accès direct à la mémoire ;
le processeur de commande est configuré pour déterminer l'adresse du code de tâche et/ou des données de tâche auxquels il faut accéder, sur la base des informations de tâche de la tâche d'exécution de code allouées par la ressource d'accélération hétérogène (10) ;
le module DMA est configuré pour envoyer une demande d'accès aux données de mémoire à une unité de gestion de mémoire d'entrée/sortie (23), en fonction de l'adresse du code de tâche et/ou des données de tâche auxquels il faut accéder, et pour recevoir le code de tâche et/ou les données de tâche transmis par l'unité de gestion de mémoire d'entrée/sortie (23).

2. Système de protection de code selon la revendication 1, dans lequel la ressource d'accélération hétérogène (10) est un dispositif d'accélération hétérogène (22) ou un module hétérogène virtuel, et la ressource d'accélération hétérogène (10) est configurée par un moniteur de machine virtuelle (21) pour le système de protection de code ; et
le module hétérogène virtuel est créé par le moniteur de machine virtuelle (21) sur la base d'un pilote de dispositif hétérogène correspondant au dispositif d'accélération hétérogène (22), et différents modules hétérogènes virtuels correspondent à différentes régions de mémoire au sein du dispositif d'accélération hétérogène (22).

3. Système de protection de code selon la revendication 1 ou 2, dans lequel la ressource d'accélération hétérogène (10) exécute uniquement la tâche d'exécution de code du système de protection de code configuré ; et
la tâche d'exécution de code est configurée avec des informations d'identité du système de protection de code, et la ressource d'accélération hétérogène (10) est configurée pour exécuter la tâche d'exécution de code lorsque les informations d'identité du système de protection de code auquel appartient la tâche d'exécution de code allouée pour exécution correspondent aux informations d'identité préconfigurées du système de protection de code.

4. Système de protection de code selon l'une quelconque des revendications 1 à 3, dans lequel le module de commande d'accélération hétérogène (12) étant configuré pour commander la ressource d'accélération hétérogène (10) configurée, afin d'exécuter la tâche d'exécution de code allouée, comprend :
accéder à la ressource d'accélération hétérogène (10) sur la base d'une interface d'E/S mappée en mémoire.

5. Système de protection de code selon l'une quelconque des revendications 1 à 4, dans lequel le processeur de commande est en outre configuré pour déterminer des informations d'identité du système de protection de code correspondant à la tâche d'exécution de code, sur la base de la tâche d'exécution de code exécutée par la ressource d'accélération hétérogène (10), et configurer les informations d'identité pour la demande d'accès aux données en mémoire ; et
le système de protection de code est configuré pour fournir un environnement d'exécution fiable basé sur un logiciel, et/ou le système de protection de code est configuré pour fournir un environnement d'exécution pour un calcul multipartite sécurisé et/ou un apprentissage fédéral.

6. Procédé de protection de code, appliqué à un système de protection de code, dans lequel le système de protection de code est configuré avec une ressource d'accélération hétérogène, et le procédé de protection de code comprend :
l'acquisition d'une tâche d'exécution de code (S10), dans laquelle la tâche d'exécution de code comprend l'exécution du code d'un logiciel et/ou l'accès aux données du logiciel ;
l'allocation, par un module d'accélération hétérogène, de la tâche d'exécution de code à la ressource d'accélération hétérogène configurée pour le système de protection de code (S11) ; et
piloter, par un module de pilotage d'accélération hétérogène, la ressource d'accélération hétérogène pour exécuter la tâche d'exécution de code allouée (S12),
dans lequel l'allocation, par un module d'accélération hétérogène, de la tâche d'exécution de code à la ressource d'accélération hétérogène configurée pour le système de protection de code, comprend :
la détermination de la tâche d'exécution de code à exécuter par la ressource d'accélération hétérogène sur la base d'un type de tâche d'exécution de code et de l'efficacité d'exécution de tâche du système de protection de code afin d'attribuer la tâche d'exécution de code à la ressource d'accélération hétérogène ;
dans lequel, après avoir déterminé la tâche d'exécution de code à exécuter par la ressource d'accélération hétérogène, le procédé de protection de code comprend en outre :
l'envoi, par le module de commande d'accélération hétérogène, d'informations de tâche relatives à la tâche d'exécution de code à la ressource d'accélération hétérogène afin de commander à la ressource d'accélération hétérogène d'exécuter la tâche d'exécution de code, les informations de tâche étant utilisées pour déterminer une adresse du code de tâche et/ou des données de tâche auxquels il faut accéder ;
dans lequel la ressource d'accélération hétérogène (10) comprend un processeur de commande et un module DMA d'accès direct à la mémoire, le code de tâche et/ou les données de tâche configurés pour exécuter la tâche d'exécution de code sont stockés dans une mémoire sécurisée, et le procédé de protection de code comprend en outre :
la transmission du code de tâche et/ou des données de tâche à la ressource d'accélération hétérogène, sur la base d'une demande d'accès aux données de mémoire de la ressource d'accélération hétérogène (S13), dans lequel la demande d'accès aux données de mémoire est envoyée sur la base d'une adresse du code de tâche et/ou des données de tâche auxquels la ressource d'accélération hétérogène doit accéder, telle que déterminée par les informations de tâche de la tâche d'exécution de code, l'adresse du code de tâche et/ou des données de tâche auxquels il faut accéder est déterminée par le processeur de commande, la demande d'accès aux données en mémoire est envoyée par le module DMA à une unité de gestion de mémoire d'entrée/sortie (23), en fonction de l'adresse du code de tâche et/ou des données de tâche auxquels il faut accéder, afin de transmettre le code de tâche et/ou les données de tâche transmis par l'unité de gestion de mémoire d'entrée/sortie (23) à la ressource d'accélération hétérogène.

7. Procédé de protection de code selon la revendication 6, dans lequel la tâche d'exécution de code est configurée avec des informations d'identité du système de protection de code, de sorte que la ressource d'accélération hétérogène exécute la tâche d'exécution de code lorsque les informations d'identité du système de protection de code auquel appartient la tâche d'exécution de code allouée pour exécution correspondent aux informations d'identité préconfigurées du système de protection de code.

8. Procédé de protection de code selon la revendication 6 ou 7, dans lequel le pilotage de la ressource d'accélération hétérogène configurée pour exécuter la tâche d'exécution de code allouée comprend :
l'accès à la ressource d'accélération hétérogène sur la base d'une interface d'E/S mappée en mémoire.

9. Procédé de protection de code selon l'une quelconque des revendications 6 à 8, dans lequel le procédé de protection de code comprend en outre :
la demande d'accès aux données en mémoire est configurée avec des informations d'identité du système de protection de code, et les informations d'identité sont déterminées sur la base de la tâche d'exécution de code exécutée par la ressource d'accélération hétérogène ;
la transmission du code de tâche et/ou des données de tâche à la ressource d'accélération hétérogène, sur la base de la demande d'accès aux données mémoire de la ressource d'accélération hétérogène, comprend :
la détermination de la correspondance entre les informations d'identité et une adresse à laquelle accède la demande d'accès aux données mémoire ; et
si elles correspondent, la transmission du code de tâche et/ou des données de tâche à la ressource d'accélération hétérogène.

10. Architecture de système virtuel, comprenant une machine virtuelle sécurisée, un moniteur de machine virtuelle (21) et un dispositif d'accélération hétérogène (22), dans laquelle la machine virtuelle sécurisée est le système de protection de code selon l'une quelconque des revendications 1 à 5.

11. L'architecture de système virtuel selon la revendication 10, dans laquelle le moniteur de machine virtuelle (21) est configuré pour configurer une ressource d'accélération hétérogène (10) pour la machine virtuelle sécurisée ;
la ressource d'accélération hétérogène (10) est le dispositif d'accélération hétérogène (22) ou un module hétérogène virtuel ; et
le module hétérogène virtuel est créé par le moniteur de machine virtuelle (21) sur la base d'un pilote de dispositif hétérogène correspondant au dispositif d'accélération hétérogène (22), et différents modules hétérogènes virtuels correspondent à différentes régions de mémoire au sein du dispositif d'accélération hétérogène (22).

12. Architecture de système virtuel selon la revendication 10, dans laquelle le moniteur de machine virtuelle (21) est configuré pour configurer une table de pages imbriquées pour la machine virtuelle sécurisée ; et
la table de pages imbriquées est configurée pour indiquer une relation de mappage entre une adresse physique utilisateur de la machine virtuelle sécurisée et une adresse physique hôte de la ressource d'accélération hétérogène (10).

13. Architecture de système virtuel selon l'une quelconque des revendications 10 à 12, comprenant en outre une mémoire sécurisée (13) et une unité de gestion de mémoire d'entrée/sortie (23),
dans laquelle la mémoire sécurisée (13) est configurée pour la machine virtuelle sécurisée, et le code de tâche et/ou les données de tâche configurés pour exécuter la tâche d'exécution de code sont stockés dans la mémoire sécurisée (13) ;
l'unité de gestion de mémoire d'entrée/sortie (23) est configurée pour recevoir une demande d'accès aux données de mémoire envoyée par la ressource d'accélération hétérogène (10), et transmettre le code de tâche et/ou les données de tâche à la ressource d'accélération hétérogène (10) sur la base de la demande d'accès aux données de mémoire ;
la demande d'accès aux données mémoire est configurée avec des informations d'identité correspondant à la machine virtuelle sécurisée, et l'unité de gestion de mémoire d'entrée/sortie (23) étant configurée pour transmettre le code de tâche et/ou les données de tâche à la ressource d'accélération hétérogène (10) sur la base de la demande d'accès aux données mémoire, comprend :
déterminer si les informations d'identité correspondent à une adresse à laquelle la demande d'accès aux données mémoire a accédé ; et
si elles correspondent, transmettre le code de tâche et/ou les données de tâche à la ressource d'accélération hétérogène (10).

14. Puce comprenant le système de protection de code selon l'une quelconque des revendications 1 à 5.

15. Dispositif électronique, comprenant la puce selon la revendication 14.
